# EUROPEAN PATENT APPLICATION

(11) **EP 4 550 691 A1**
(43) Date of publication of application: **07.05.2025**
(21) Application number: 23207278.5
(22) Date of filing: 01.11.2023
(51) Int. Cl.: H04B 10/114

(54) **A DATA TRANSFER COMMUNICATION SYSTEM USING UV-LIGHT**

(71) Applicant: UV Medico A/S, 8230 Åbyhøj (DK)
(72) Inventor: BRIMNES GARDNER, Asger, 8230 Åbyhøj (DK); TØNNING, Peter, 8230 Åbyhøj (DK); VOLET, Nicolas, 8230 Åbyhøj (DK); CALMAR, Stig, 8230 Åbyhøj (DK)
(74) Representative: Zacco Denmark A/S

(57) **Abstract**

A data transfer communication system, the system comprising at least one light source for emitting light, at least one modulation means for modulating properties of the emitted light from the at least one light source, hereby creating at least one modulated signal, at least one transmitting means for transmitting the at least one modulated signal, and at least one receiving device, wherein the light source is configured for generating and emitting UV-light, wherein the at least on modulation means for modulating properties of the emitted light, wherein the at least one transmitting means for transmitting the modulated signal is configured for enabling data transmission between the at least one light source and the at least one receiving device, wherein the at least one receiving device is configured for receiving, detecting, and demodulating the UV-light generated by the light source, allowing for data transfer communication within the data transfer communication system.

## Description

### Technical Field

The invention relates to an optical communication system for data transfer, the system comprising a light source, modulation means, transmitting means and a receiving device.

### Background art

Wireless communication is extensively used in modern day society. However, and also due to this extensive use, wireless communication encounters bandwidth bottlenecks due to the exponentially increasing data traffic demands.

Traditionally, wireless communication standards transmit information with radio frequencies (RF). Communication standards using light (Li-Fi) from the infrared (IR), visible (VS) and ultraviolet (UV) have been proposed. Li-Fi encompasses several advantages compared to traditional RF-based systems such as Wi-Fi, in particular much larger modulation bandwidths and a much wider, unlicensed band enabling more communication channels with reduced crosstalk. In addition to this, light does not interfere with other RF systems employed in e.g. aviation and hospitals. Conventional Li-Fi employs visible light communication (VLC), where information is encoded in light in the visible spectrum.

However, this can pose difficulties due to interference from visible light in the solar spectrum as well as generic indoor lighting. For communication and sensing purposes, light in the IR domain has been used extensively, and the technology is well developed. However, this also means that the IR band accessed and used by many devices such as remote controls, sensors and/or LiDAR systems, and as such communication systems based on this can suffer from unwanted interference effects, as is the case with RF communication systems.

### Summary

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

It is an objection of the invention to address one or more of the disadvantages of the prior-art. It is a further object of the present invention to overcome the line-of-sight limitations of traditional LiFi. A further object of the present invention is to provide a system which would be ideal for covert communication and transferral of sensitive data, such as in e.g., military use.

Thus, disclosed herein in a first aspect is a data transfer communication system, the system comprising: at least one light source for emitting light; at least one modulation means for modulating properties of the emitted light from the at least one light source, hereby creating at least one modulated signal; at least one transmitting means for transmitting the at least one modulated signal; and at least one receiving device; wherein the light source is configured for generating and emitting UV-light with a wavelength of at or below 250 nm, wherein the at least on modulation means for modulating properties of the emitted light from the at least one light source is configured for at least modulating one or more of the amplitude, frequency, phase, and polarization of the UV-light generated by the at least one light source, wherein the at least one transmitting means for transmitting the modulated signal is configured for enabling data transmission between the at least one light source and the at least one receiving device, and wherein the at least one receiving device is configured for receiving, detecting, and demodulating the UV-light generated by the at least one light source, hereby allowing for data transfer communication within the data transfer communication system.

It has previously been known that UV-light with a wavelength of at or below 250 nm was harmful for human health. The inventor has however researched and come to a solution that UV-light with a wavelength of at or below 230 nm is not harmful for human health. The inventor has therefore developed a data transfer communication system utilizing UV-light with a wavelength of at or below 250 nm as a means to address one or more of the disadvantages of the prior art, such as the conventional Li-Fi utilizing visual light communication.

By a light source is meant a component, which may be used for generating and emitting a UV-light with controlled properties, such as any of amplitude, wavelength, phase and/or polarization. The light source may be configured to maintain a steady amplitude and/or wavelength, but may also vary either the amplitude or the wavelength, or vary both the amplitude and the wavelength.

Further, the light source may also be configured for varying either the phase or the polarization, or vary both the phase and the polarization.

UV-light is defined as light having a wavelength at or below 250 nm, such as at or below 250 nm. It may further be defined as a wavelength at or above 100 nm, such as at or below 230 nm and at or above 190 nm, such as between 220 nm and 225 nm.

It is advantageous to use light as a means for communication, in that light is unaffected by electromagnetic interference, which may be, but not limited to nearby power lines, electrical cables, lightning conductors, electromagnetic interference due to machinery, aviation, hospitals, but also electrical signals such as RF-based systems and/or within power electronics such as power converters.

It is advantageous to use UV-light at or below 250 nm, such as at or below 250 nm and at or above 100 nm, such as at or below 230 nm and at or above 190 nm, such as at 222 nm, as light at these wavelengths are invisible to the human eye. Hence, it is possible to perform Li-Fi data transmission in dark locations without lighting up the surrounding. Hence, a person may not be visibly affected by Li-Fi data transmission in a situation where a dark room is preferred, such as in a bedroom at night.

It is further advantageous to use UV-light at or below 250 nm, such as at or below 250 nm and at or above 100 nm, such as at or below 230 nm and at or above 190 nm, such as at 222 nm, as light at these wavelengths are invisible to the human eye and are further easily confined. Communication using UV-light at the above-mentioned wavelengths is therefore ideal to use in situation where sensitive communication is required, e.g., in military operations.

It is advantageous to use UV-light at or below 230 nm, in that UV-light at or below 230 nm is safe to use with human presence.

In one or more embodiments, the wavelength of the UV-light is between 100 nm and 250 nm, such as between, such as between 190 nm and 250 nm, such as between 190 nm and 240 nm, or such as between 190 nm and 230 nm.

In addition to the advantage above, an communication means which is unaffected by electromagnetic interference is advantageous in high-voltage testing of equipment, such as insulation tests..

Furthermore, the UV-light is unaffected by light in the solar spectrum including light from generic in-door light sources, such as lamps. Hence, it is a further advantage, that the UV-light is subjected to less interference compared to other light-based communication means, such as visible light communication (VLC).

It is advantageous to use UV-light at or below 250 nm, such as at or below 250 nm and at or above 100 nm, such as at or below 230 nm and at or above 190 nm, in that UV-light comprises a large Rayleigh scattering cross section. A large Rayleigh scattering cross section relaxes line-of-sight (LOS) requirements for data communication.

It is advantageous to use UV-light at or below 250 nm, such as at or below 250 nm and at or above 100 nm, such as at or below 230 nm and at or above 190 nm, in that UV-light comprises a large modulation bandwidth and a, at the time of filing of the application, wide unlicensed band. It is therefore possible to enable large amount of communication channels with reduced crosstalk.

It is advantageous to use UV-light at or below 250 nm, such as at or below 250 nm and at or above 100 nm, such as at or below 230 nm and at or above 190 nm, in that UV-light is significantly more likely than visible light to interact with particles in the medium the UV-light is emitted through, such as ambient molecules in air, i.e., the atmosphere, leading to more scattering of said UV-light. As an example, UV light at 222nm has a 10 to 100 times higher scattering cross section than visible light and around 2400 times more scattering than infrared light at the common 1550nm telecom wavelength. In other words, the UV-light achieves a higher spatial distribution compared to visible light. A higher spatial distribution of UV-light may enable UV-light communication to be available over and/or around obstacles to a higher degree than a comparable visual light communication system. Particles in the context of this advantage, is meant as particles significantly smaller than the wavelength of the emitted UV-light, e.g., ambient molecules in air, water/steam, aerosol or any other particles suitable for Rayleigh scattering of UV light.

It is advantageous to use UV-light at or below 250 nm, such as at or below 250 nm and at or above 100 nm, such as at or below 230 nm and at or above 190 nm, in that UV-light is unable to pass some transparent materials, such as glass, such as reinforced glass, such as reinforce glass comprising metal. In other words, a data transfer communication system utilizing UV-light may be useful in office locations wherein an isolated communication system is desired, such as shared office spaces. Hence, data security is improved in data transfer systems utilizing UV-light.

By a modulation means is meant a means for controlling one or more properties of an emitted signal, such as light. The modulation is a means of converting data in form of electrical signals into optical lights. The emitted light may have one or more properties altered so as one or more properties of said emitted light reflects a data signal.

In case of direct modulation may the light source be directly modulated. Direct modulation of the light source may be, but is not limited to, modulation of the injection current of the light source and/or modulation of the diode operating temperature or any other suitable means for direct modulation of the light source.

Modulation means may also be a component, such as an optical modulator. An optical modulator may be, but is not limited to acousto-optic modulators (AOM), electro-optic modulators (EOM), interferometric modulators, and/or electro absorption modulators or any other suitable modulation components.

A means for modulation of one or more properties of the UV-light is required in order to enable data communication via UV-light.

An amplitude modulation of a light signal may be understood as the amplitude being altered according to the instantaneous amplitude of a data signal, so as the amplitude of the emitted light is varied in relation to the data signal. An example may be that the instantaneous amplitude of the data signal is multiplied with a factor on the amplitude of an unmodified signal.

It is advantageous to utilize amplitude modulation, in that amplitude modulation is a simple form of modulation. Hence, a less complex system is achieved. Furthermore, amplitude modulation is less effected by distance travelled of the emitted signal. Hence, a larger travel distance can be achieved.

A frequency modulation of a light signal may be understood as the frequency being altered according to the instantaneous amplitude of a data signal, so as the frequency of the emitted light is increased by a factor of the value of the data signal. The frequency may be understood as being inversely proportional to the wavelength. An example may be that the instantaneous amplitude of the data signal is multiplied with a factor on the frequency of an unmodified signal.

It is advantageous to utilize frequency modulation, in that frequency modulation has a high signal-to-noise ratio. Hence, the signal transmitted by the UV-light is further robust against interference.

A phase modulation of a light signal may be understood as the phase being altered according to the readings of the instantaneous amplitude of a data signal by a modulating wave, so as the modulated emitted lights reflects the instantaneous amplitude of a data signal at a phase according to a modulating wave. An example may be that the modulated emitted lights reflect the instantaneous amplitude of a data signal at a phase according to an instantaneous amplitude of a modulating wave.

It is advantageous to utilize phase modulation, in that phase modulation may use a relatively narrow frequency band. Hence, the signal transmitted by the UV-light is further robust against interference from other signals close to, or within the range of the wavelength of the UV-light.

Either of the above-mentioned modulation means may be used for both analogue and digital data transfer with possibility of employing modulation methods such as multiplexing or shift keying.

By demodulation is meant a process for transforming a transmitted signal, in this case the UV-light, so as the transmitted signal may be transformed into readable data by e.g., an electronic device. The demodulated signal may be demodulated by a demodulating means

By a transmitting means is meant a means suitable for transmitting a signal, wherein the signal may be modulated. The transmitting means is required for transmitting data.

The transmitting means may comprise the at least one light source and/or one or more modulation means.

By a receiving device is meant a component able to receive a signal, wherein the signal may be modulated. The receiving device is required for receiving data. The receiving device may be any receiving device.

In one or more embodiments, the at least one light source for emitting light is emitting coherent light, such as a laser, a frequency comb, and/or a supercontinuum source.

By a coherent light source is meant a light source wherein the individual waves of the emitted light at each point normal to the direction of the emitted light may be identical, in other words the individual waves of the emitted light have a fixed and predictable phase relationship with each other. The emitted coherent light may be monochromatic, in other words emitted coherent light may have a single wavelength. The mitted coherent light may also not be monochromatic. The coherent light may be synchronized, meaning that the individual waves of the emitted light may have the same direction and/or amplitude.

It is advantageous to utilize a coherent light source, in that coherence allows for additional modes of data transferal compared to state-of-the-art Li-Fi systems using light-emitting diodes (LEDs).

It is advantageous to utilize a coherent light source, in that a coherent light allows for longer transmission lengths compared to state-of-the-art Li-Fi systems using light-emitting diodes (LEDs).

In one or more embodiments, the at least one light source comprises a pump light source and a frequency conversion module configured for converting the pump light into UV-light with a wavelength at or below 250 nm, and preferably at or above 100 nm.

By a pump light source is meant any source for generating a laser e.g., by pumping cavities, flashlamp pumping, arc lamp pumping, external laser pumping, but may also be electrical pumping, gas dynamic pumping or any other suitable type of pump light sources. The pump source of the pump light source may e.g., be light, but may also be electrical current. Alternatively, any other sources of pump energy may be used such as, but not limited to, chemical or nuclear reactions.

By a frequency module is meant a module for altering the wavelength of light, e.g., the laser generated by a pump light source, so as the wavelength is within the spectrum of UV-light, e.g., a wavelength at or below 250 nm and at or above 100 nm.

It is advantageous to utilize a pump light source for generating coherent light, e.g., lasers, in that the light emitted by a pump light source may be controllable by various energy sources within the data transfer communication system.

It is advantageous to utilize a pump light source for generating coherent light comprising a frequency conversion module, in that the generated laser may be within any desired wavelength, whereas the output of the light source may be within a specific scope or value, such as UV-light with a wavelength at or below 250 nm and at or above 100 nm.

In one or more embodiments, the system is configured such that the at least one modulated signal is created before being passed to the frequency conversion module.

It is advantageous to create the at least one modulated signal before the emitted light passes the frequency module, in that the light comprises a plurality of wavelengths. In other words, the light enters one or more transmission optical components before passing/entering the frequency module, so that one light source may emit UV-light at a plurality of wavelengths, such a plurality of wavelengths at or below 250 nm and at or above 100 nm.

In one or more embodiments, the system is configured such that the at least one modulated signal is created after being passed through the frequency conversion module.

It is advantageous to create the at least one modulated signal after the emitted light passes the frequency module, in that the frequency module may be used for various types of modulation. In other words, the frequency module improves the flexibility related to emitting encoded UV-light, such as light at or below 250 nm and at or above 100 nm.

In one or more embodiments, the at least one light source for emitting light is incoherent, such as a light-emitting diode and/or a field emission device [FED].

By an incoherent light source is meant a light source wherein the individual waves of the emitted light may not necessarily be in phase, at the same wavelength, same direction, and/or the same amplitude.

By a light-emitting diode is meant any diode capable of emitting light.

By a field emission device [FED] is meant a light source generating light by electrons impacting a material.

It is advantageous to utilize an incoherent light source, in that an incoherent light source has improved energy efficiency.

In one or more embodiments, wherein the at least one light source for emitting light is configured for emitting single photons.

In one or more embodiments, the at least one light source for emitting light comprises an array of light sources.

By an array is meant a plurality, of light sources in this context, arranged at a pattern which may and may not have identical spacing.

It is advantageous to utilize an array of light sources, in that a plurality of light beams may be emitted. The emitted light may be in the same direction, which may be advantageous in case of mitigating the risk of data loss. The individual light sources within the array of light sources may also be individually controlled, which may be advantageous in cases where a repair is required so that a communication stream is not interrupted when individual light sources are being repaired or exchanged.

It is further advantageous to utilize an array of light sources, in that a plurality of light beams may be directed in individual directions, so that one or more light sources in the plurality of light sources are directed at specific receiving systems, e.g., that a first portion of the light sources in the plurality of light sources in the array of light sources are directed at one or more first receiving systems, and that a second portion of the light sources in the plurality of light sources in the array of light sources are directed at one or more second receiving systems. Hereby a single array of light sources may be used for direct communication with systems placed at different locations.

The array of one or more light sources may comprise identical types of light sources, but may also use any combination of different light sources.

In one or more embodiments, the array of light sources is configured for generating and emitting multiple wavelengths in a UV-light spectrum at or below 250 nm, and preferably at or above 100 nm.

It is advantageous to emit multiple wavelengths in a UV-light spectrum at or below 250 nm and at or above 100 nm, as it enables the possibility of multiband communication. Multiband communication may be used to simultaneously transmit data unaffected by the data transmitted via UV-light at different wavelengths. This enables the data transfer communication system to dedicate specific wavelengths for specific types of data. One or more wavelength may e.g., be dedicated to encrypted data, whereas other wavelengths may be dedicated to un-encrypted data.

It is a further advantage to emit multiple wavelengths in a UV-light spectrum at or below 250 nm and at or above 100 nm, as specific wavelength may be used in situations where specific wavelengths are desired for specific receiving devices.

It is a further advantage to emit multiple wavelengths in a UV-light spectrum at or below 250 nm and at or above 100 nm, as the possibility of multiband communication enables larger data files to be simultaneously send at different wavelengths. The communication system may significantly reduce the time required for large data transfers.

In one or more embodiments, the at least one receiving device comprise one or more receiving optical components, such as filters, waveguides, lenses, and/or beam splitters.

It is advantageous for the at least one receiving device to comprise one or more receiving optical components, in that the received UV-light may be prepared for reception by the receiving device. Hence, the requirements for the receiving device are relaxed, as the one or more receiving optical components prepare the UV-light.

It is advantageous for the one or more receiving optical components to be a filter, as a filter may reduce unwanted light to enter the receiving device. By hindering unwanted light to enter the receiving device data receiving errors may be reduced.

It is advantageous for the one or more receiving optical components to be a waveguide, as UV-light may be directed to enter the receiving device. Implementing one or more waveguides enables the receiving device to be more freely arranged within the data transfer communication system.

It is advantageous for the one or more receiving optical components to be an optical lens, as an optical lens may be used to direct light to enter the receiving device. Implementing one or more optical lenses enables the receiving device to be more freely arranged within the data transfer communication system in addition to reduce the size of the receiving device.

It is advantageous for the one or more receiving optical components to be a beam splitter, as a beam splitter may be used to distribute the UV-light received by the receiver. Implementing one or more beam splitters hereby enables the receiver to redirect the received UV-light to a plurality of optical components, e.g., a plurality of demodulators or any other optical components.

In one or more embodiments, the one or more of the receiving optical components are integrated on a first Photonic Integrated Circuit [PIC].

It is advantageous for the one or more receiving optical components to be integrated on a first PIC, in that a PIC allows for a compact design.

It is advantageous for the one or more receiving optical components to be integrated on a first PIC, in that a PIC may be simple to exchange if alternative one or more receiving optical components are desired.

In one or more embodiments, the at least one receiving device comprise a photodetector for detecting UV-light with a wavelength at or below 250 nm and above 100 nm, such as a photodiode, a photoresistor, and/or a phototransistor.

By a photodiode is meant a light-sensitive semiconducting diode, which may be used to convert light into current.

By a photoresistor is meant a resistor, wherein the resistance of said resistor changes depending on the intensity of light subjected to the photoresistor.

By a phototransistor is meant a transistor controllable by light. Phototransistor may be, but are not limited to a bipolar phototransistor, field-effect phototransistor, and/or solaristors.

It is advantageous to implement a detector in the receiving device, in that the detector may be used to convert the UV-light to an electrical signal for further processing. Electrical signals are generally used in the most systems. The system is therefore more compatible with existing systems if a detector is implemented.

It is further advantageous to implement a detector in the receiving device, in that a detector may activate the receiving device when subjected to UV-light at or below 250 nm and above 100 nm. In other words, the detector may be utilized to turn on the receiving device when data transmission is ongoing, thus reducing power consumption when data transmission is absent.

In one or more embodiments, the at least on receiving device comprises an array of photodetectors.

By an array is meant a plurality, of photodetectors in this context, arranged at a pattern which may and may not have identical spacing.

It is advantageous to utilize an array of photodetectors, in that a plurality of light beams may be detected. The detected light may come from the same direction, which may be advantageous in case of mitigating the risk of data loss. The individual photodetectors within the array of photodetectors may also be individually controlled, which may be advantageous in cases where a repair is required so that a communication stream is not interrupted when individual photodetectors are being repaired or exchanged.

It is further advantageous to utilize an array of photodetectors, in that a plurality of light beams may be detected from individual directions, so that one or more photodetectors in the plurality of photodetectors are directed at specific transmitting systems, e.g. that a first portion of the photodetectors in the plurality of photodetectors in the array of photodetectors are directed at one or more first transmitting systems, and that a second portion of the photodetectors in the plurality of photodetectors in the array photodetectors are directed at one or more second transmitting systems. Hereby a single array of photodetectors may be used for direct communication with systems placed at different locations.

The array of photodetectors may comprise identical types of photodetectors, but may also use any combination of different photodetectors.

In one or more embodiments, the system comprises a transceiver, wherein the transceiver comprises the at least one light source for emitting light, the at least one modulation means, the at least one transmitting means, and the receiving device.

It is advantageous to utilize a transceiver, in that a transceiver enables two-way communication with a reduced number of individual devices. Implementing a transceiver may enable the possibility of sending and receiving data from the same device.

It is further advantageous to utilize a transceiver, in that synching errors between the different components of the data transfer communication system is reduced.

In one or more embodiments, the wavelength of the UV-light is between 190 nm and 230 nm.

In one or more embodiments, the at least one receiving device comprises a solar-blind detector.

By a solar-blind detector is meant a detector that is not sensitive to light signals in the solar spectrum.

It is advantageous to implement a solar-blind detector in the system, due to the emitted UV-light not being in the solar spectrum. A solar-blind detector may reduce light pollution of the receiving components with the system, hereby reducing the requirements for the quality of the emitted UV-light, such as amplitude. Reduced requirements for the emitted UV-light, such as a reduced amplitude of the UV-light, may reduce the power required to emit said UV-light. Hence, the power consumption of the system may be reduced. The power efficiency may also be improved due to lower light pollution.

A further advantage to the lower power requirements after implementing a solar blind detector, is that the physical size of a power supply circuit and/or light emitting/transmitting component(s) may be reduced. Hence, a smaller, thus more compact, system may be achieved.

Furthermore, a reduced power supply circuit may also generate less heat, a data transfer communication system generating less heat may be suitable to be arranged at higher ambient temperatures than a data transfer communication system generating more heat.

It is advantageous to implement a solar-blind detector in the system, in that a solar-blind detector has lower requirements for one or more optical components, such as transmitting or receiving optical components.

It is advantageous to implement a solar-blind detector in the system, in that a solar-blind detector improves the selection of the data-carrying signal in the received UV-light, as ambient light noise is reduced.

In one or more embodiments, the at least one transmitting means comprises one or more transmitting optical components, such as a filter, a waveguide, a lens, and/or a beam splitter.

It is advantageous for the at least one transmitting device to comprise one or more transmitting optical components, in that the transmitted UV-light may be prepared for transmission and/or reception by the receiving device.

It is advantageous for the one or more transmitting optical components to be a filter, as a filter may further define the UV-light emitted by the transmitting means. By defining the UV-light emitted by the transmitting means data receiving errors may be reduced.

It is advantageous for the one or more transmitting optical components to be a waveguide, as UV-light may be directed to exit the transmitting device. Implementing one or more waveguides enables the transmitting device to be more freely arranged within the data transfer communication system.

It is advantageous for the one or more transmitting optical components to be an optical lens, as an optical lens may be used to direct light to exit the transmitting device. Implementing one or more optical lenses enables the transmitting device to be more freely arranged within the data transfer communication system in addition to reduce the size of the transmitting device.

It is advantageous for the one or more transmitting optical components to be a beam splitter, as a beam splitter may be used to further define the UV-light emitted by the transmitting means. Implementing one or more beam splitters hereby increases the data quality transmitted by the transmitting device.

The one or more transmitting optical components and one or more receiving optical components may alternatively be the same optical components.

The one or more transmitting optical components and receiving optical component may also be a combination of shared optical components and individual components.

In one or more embodiments, the one or more of the transmitting optical components are integrated on a second Photonic Integrated Circuit [PIC].

It is advantageous for the one or more transmitting optical components to be integrated on a second PIC, in that a PIC allows for a compact design.

It is advantageous for the one or more transmitting optical components to be integrated on a second PIC, in that a PIC may be simple to exchange if alternative one or more transmitting optical components are desired.

The first and second Photonic Integrated Circuit may alternatively be the same Photonic Integrated Circuit.

It is advantageous for the first and second PIC to be the same PIC, in that a single component hosts the optical components used for both transmitting and receiving. This is particularly advantageous if the receiver and transmitter are comprised in one single transceiver unit. A data transfer communication system comprising a combined PIC may therefore be more compact compared to a data transfer communication system comprising a separate first and second PIC.

In one or more embodiments, the at least one transmitting means and the at least on receiving device are arranged such that information carrying signals are spatially confined, enabled by a large attenuation of UV-light by most materials.

In one or more embodiments, the UV-light is emitted at a power per area of at least 0.1 µW/cm2, hereby allowing for simultaneous communication and disinfection using the UV-light. In one or more embodiments, the UV-light is emitted at a power per area of between 0.1 µW/cm2 and 1000 µW/cm2.

In one or more embodiments, the UV-light is emitted at a power per area of up to 0.8 µW/cm2 allowing for simultaneous communication and disinfection using the UV-light.

It is an advantage to emit the UV-light at a power per area of up to 0.8 µW/cm2, in that the data transfer communication system may be more suitable for sterile environments e.g., hospitals, medical storage facilities, biotechnical facilities, lab environments, but also any other location, wherein disinfection is desired, such as food storage locations, kitchens, hospital housing areas. In this way, the communication system is combined with a disinfection system (hereby providing a two in one system).

In one or more embodiments, the UV-light is emitted at a power per area between to 1 µW/cm2 and 10 µW/cm2 allowing for simultaneous communication and disinfection using the UV-light.

In one or more embodiments, the UV-light is emitted at a power per area of at least 0.1 µW/cm2, such as between 0.1 µW/cm2 and 1000 µW/cm2, such as between 0.1 µW/cm2 and 500 µW/cm2, such as between 0.1 µW/cm2 and 100 µW/cm2, or such as between 0.1 µW/cm2 and 50 µW/cm2, hereby allowing for simultaneous communication and disinfection using the UV-light.

In one or more embodiment, the UV-light is emitted at a power per area between 0.1 µW/cm2 and 50 µW/cm2, such as between 0.2 µW/cm2 and 50 µW/cm2, such as between 0.3 µW/cm2 and 50 µW/cm2, such as between 0.4 µW/cm2 and 50 µW/cm2, or such as between 0.5 µW/cm2 and 50 µW/cm2, hereby allowing for simultaneous communication and disinfection using the UV-light.

In one or more embodiments, the UV-light is emitted at a power per area between 0.5 µW/cm2 and 50 µW/cm2, such as between 0.5 µW/cm2 and 40 µW/cm2, such as between 0.5 µW/cm2 and 30 µW/cm2, such as between 0.5 µW/cm2 and 20 µW/cm2, such as between 0.5 µW/cm2 and 10 µW/cm2, such as between 0.5 µW/cm2 and 5 µW/cm2, such as between 0.5 µW/cm2 and 1 µW/cm2, or such as between 0.5 µW/cm2 and 0.8 µW/cm2, hereby allowing for simultaneous communication and disinfection using the UV-light.

In one or more embodiments, the receiving device comprises a receiver, a photoreceptor, and a demodulating means.

By a receiver is meant a component suitable for receiving a signal, such as UV-light.

By a photoreceptor is meant a component suitable for converting light to an electrical signal, such as an electrical current, voltage, or any electrically measurable mediums or properties. The photoreceptor may be a photodetector.

By a demodulating means is meant a means for demodulating a signal, such as an electrical signal, so that data may be readable and/or transmittable. The demodulating means may be suitable for demodulating any signal modulated by a modulating means, such as the modulating means previously mentioned.

In one or more embodiments, the one or more light source, the transmitting means, and the modulation means are arranged in a transmitting device. The transmitting device may further comprise a housing.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

The above objects, as well as additional objects, features and advantages of the present disclosure will be more fully appreciated by reference to the following illustrative and non-limiting detailed description of example embodiments of the present disclosure, when taken in conjunction with the accompanying drawings.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

### Brief description of the drawings

- Fig. 1: shows an exemplary implementation of communication in a data transfer communication system according to some embodiments of the invention.
- Fig. 2a: shows an exemplary transceiver according to some embodiments of the invention.
- Fig. 2b: shows an exemplary transceiver according to some embodiments of the invention in greater detail.
- Fig. 3a: shows an exemplary light scattering scenario of UV-light.
- Fig. 3b: shows an exemplary light scattering scenario of visible light.
- Fig. 4: shows an exemplary implementation of non-line-of-sight (non-LOS) communication using a data transfer communication system according to some embodiments of the invention.
- Fig. 5: shows an exemplary implementation of communication in a data transfer communication system in an office location according to some embodiments of the invention.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

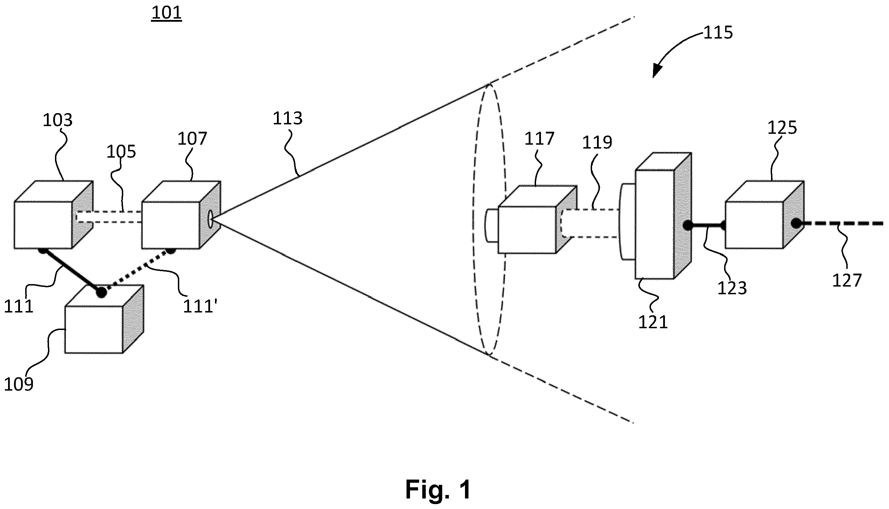

Fig. 1 describes an exemplary implementation of the first aspect of the invention. Fig. 1 shows a data transfer communication system 101, the system 101 comprising at least one light source 103 for emitting light 105, at least one modulation means 109 for modulating properties of the emitted light 105 from the at least one light source 103, hereby creating at least one modulated signal 113, at least one transmitting means 107 for transmitting the at least one modulated signal 113 and at least one receiving device 115. The Example further shows that the receiving device 115 comprises a receiver 117, a photoreceptor 121, and a demodulating means 125.

In the example illustrated in Fig. 1, UV-light 105 is generated by a light source 103. The UV-light 105 enters a transmitting means 107 where the UV-light 105 is emitted in a modulated state, thus a modulated signal 113 is emitted from the transmitting means 107. The modulation of the UV-light 105 is performed by the modulation means 109 either directly at the light source 103 via a modulation signal 111, so as the UV-light 105 enters the transmitting means 109 in a modulated state, or at the transmitting means107 via an alternative modulation signal 111', so as unmodulated UV-light 105 is transformed and emitted from the transmitting means 117 as a modulated signal 113. The modulated signal 113 is then illustrated as being received by the receiver 117 of the receiving device 115. The modulated signal 113 is subsequently directed to a photoreceptor 121 of the receiving device 115 as a received UV-light 119. The received UV-light 119 is detected and transformed into an electrical signal 123 by the photoreceptor 121, and is subsequently send to a demodulating means 125. The demodulating means 125 demodulates the electrical signal 123, thus the demodulation means 125 decodes the electrical signal 123 and generates a data signal 127, which may be transmitted and/or read by an external device not shown.

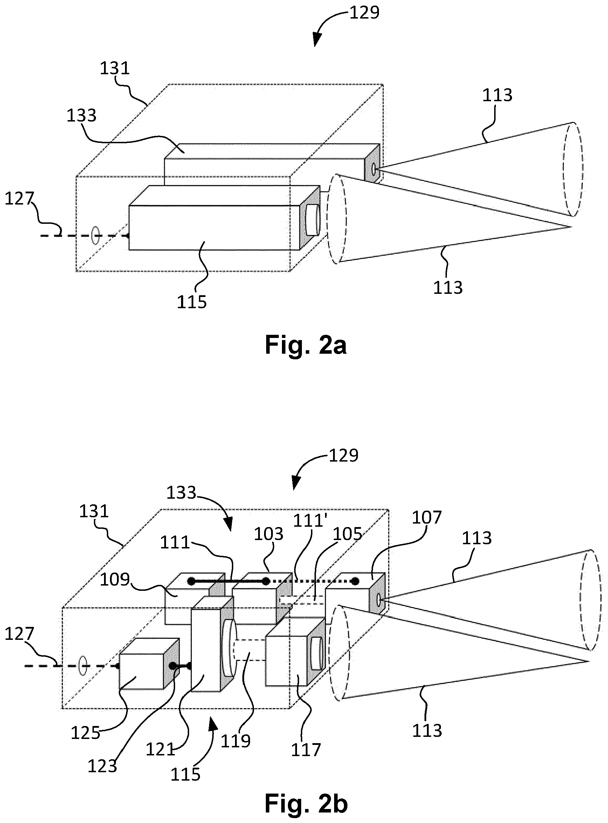

A two-way communication scenario is illustrated in both Fig. 2a and Fig. 2b. Fig. 2b illustrates the two-way communication in greater detail.

Fig. 2a shows a transceiver 129 according to an embodiment of the invention. The transceiver 129 shown in fig.2 comprises a transmitting device 133 and a receiving device 115 which are arranged in a housing 131. Fig. 2a further shows a modulated signal 113 being emitted from the transmitting device 133 of the transceiver 129, and a modulated signal 113 being received by the receiving device 115 of the transceiver 129. The receiving device 115 of the transceiver 129 is further illustrated as transmitting a data signal 127.

Fig. 2b shows a transceiver 129 according to an embodiment of the invention in greater detail compared to Fig. 2a. The transceiver 129 shown in fig. 2b comprises a light source 103, a transmitting means 107, and a modulating means 109. These components being arranged to form a transmitting device 133. The transceiver 129 further comprises a receiver 117, a photodetector 121, and a demodulation means 125. It is shown that the transmitting means 107 is emitting a modulated signal 113, wherein the modulated signal 113 is generated by modulating UV-light 105 emitted by a light source 103. The modulation of the UV-light 105 is performed by the modulation means 109 either directly at the light source 103 via a modulation signal 111, so as the UV-light 105 enters the transmitting means 109 in a modulated state, or at the transmitting means 107 via an alternative modulation signal 111', so as unmodulated UV-light 105 is transformed and emitted from the transmitting means 117 as a modulated signal 113. Another modulated signal 113, which may be from another data transfer communication system 101 or any other system, is seen as received by the receiver 117. The modulated signal 113 is subsequently directed to a photoreceptor 121 as a received UV-light 119. The received UV-light 119 is detected and transformed into an electrical signal 123 by the photoreceptor 121, and is subsequently send to a demodulating means 125. The demodulating means 125 demodulates the electrical signal 123, thus the demodulation means 125 decodes the electrical signal 123 and generates a data signal 127. The data signal 127 is shown as being transmitted.

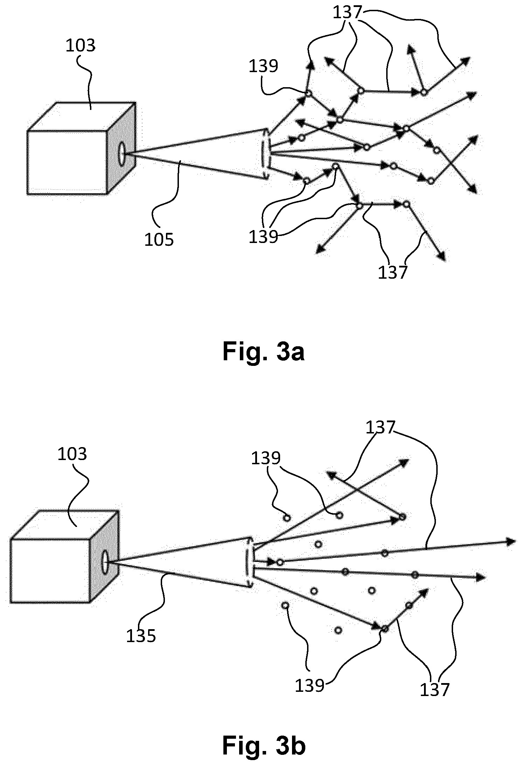

An exemplary light scattering scenario is illustrated in both Fig. 3a and Fig. 3b. Fig. 3a illustrates the light scattering of UV-light, whereas Fig. 3b illustrates the light scattering for visible light.

Fig. 3a shows a light source 103 emitting UV-light 105. The UV-light 105 comprises photons, which have a photon direction 137 illustrated with arrows. The photon direction 137 is seen as being redirected when impacting ambient molecules 139.

Fig. 3b shows a light source 103 emitting visible light 135. The visible light 135 comprises photons, which have a photon direction 137 illustrated with arrows. The photon direction 137 is seen as being redirected when impacting some ambient molecules 139, and not redirected when impacting other ambient molecules 139. The scattering of visible light 135 is therefore smaller compared to the scattering of UV-light 105 shown in Fig. 3a.

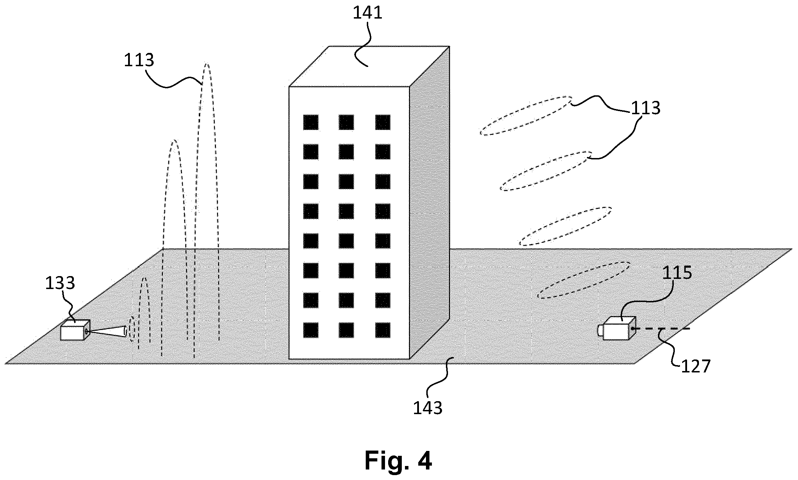

Fig. 4 shows a transmitting device 133 transmitting a modulated signal 113 across an obstacle in form of a building 141 on ground 143. A receiving device 115 is seen as receiving said modulated signal 113 and transmitting a data signal 127. The communication over the building 141 is possible due to scattering of the modulated signal 113.

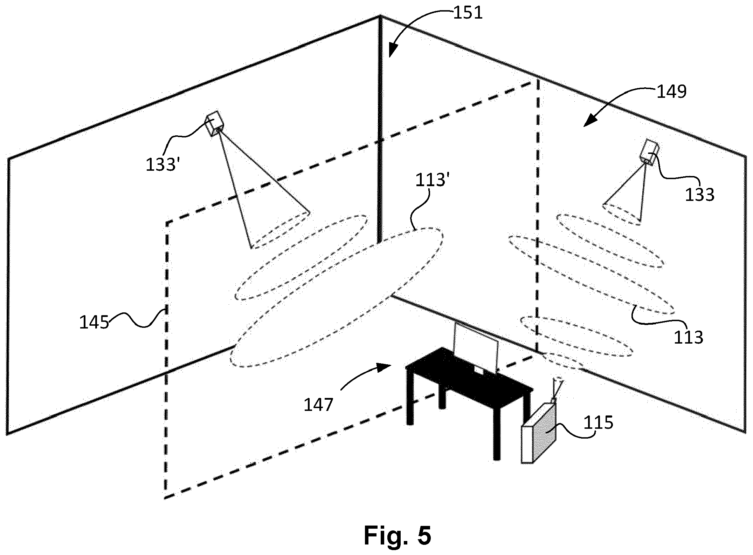

Fig. 5 shows an implementation of communication according to the invention. The example shows a first office 149 and a second office 151 separated by an obstacle in form of glass 145, wherein the first office 149 comprises a transmitting device 133 transmitting a modulated signal 113. The modulated signal 113 is received by a receiving device 115 which may and may not be connected to a PC setup 147. The second office 151 comprises an additional transmitting device 133' transmitting an additional modulated signal 113', wherein said additional modulated signal 113' is blocked by the glass 145, so as the additional modulated signal 113' is unable to reach the first office 149. The modulated signals 113, 113' both disinfect surfaces of each respective offices 149, 151.

### References

- 101: Data Transfer Communication System
- 103: Light Source
- 105: UV-light
- 107: Transmitting means
- 109: Modulation Means
- 111: Modulation Signal
- 111': Alternative Modulation signal
- 113: Modulated signal
- 113': Additional modulated signal
- 115: Receiving device
- 117: Receiver
- 119: Received UV-light
- 121: Photoreceptor
- 123: Electrical signal
- 125: Demodulating means
- 127: Data signal
- 129: Transceiver
- 131: Housing
- 133: Transmitting device
- 133': Additional transmitting device
- 135: Visible light
- 137: Photon Direction
- 139: Ambient Molecules
- 141: Building
- 143: Ground
- 145: Glass
- 147: PC setup
- 149: First office
- 151: Second office

## Claims

1. A data transfer communication system, the system comprising:
at least one light source for emitting light;
at least one modulation means for modulating properties of the emitted light from the at least one light source, hereby creating at least one modulated signal;
at least one transmitting means for transmitting the at least one modulated signal; and
at least one receiving device;
wherein the light source is configured for generating and emitting UV-light with a wavelength of at or below 250 nm,
wherein the at least on modulation means for modulating properties of the emitted light from the at least one light source is configured for at least modulating one or more of the amplitude, frequency, phase, and polarization of the UV-light generated by the at least one light source,
wherein the at least one transmitting means for transmitting the modulated signal is configured for enabling data transmission between the at least one light source and the at least one receiving device, and
wherein the at least one receiving device is configured for receiving, detecting, and demodulating the UV-light generated by the at least one light source, hereby allowing for data transfer communication within the data transfer communication system.

2. The system according to claim 1, wherein the light source is configured for generating and emitting UV-light with a wavelength of at or below 250 nm and at or above 100 nm.

3. The system according to any of the preceding claims, wherein the at least one light source for emitting light is emitting coherent light, such as a laser, a frequency comb, and/or a supercontinuum source.

4. The system according to claim 3, wherein the at least one light source comprises a pump light source and a frequency conversion module configured for converting the pump light into UV-light with a wavelength at or below 250 nm.

5. The system according to claim 1, wherein the at least one light source for emitting light is incoherent, such as a light-emitting diode and/or a field emission device.

6. The system according to claim 1, wherein the at least one light source for emitting light is configured for emitting single photons.

7. The system according to any one of the preceding claims, wherein the at least one light source for emitting light comprises an array of light sources.

8. The system according to claim 9, wherein the array of light sources is configured for generating and emitting multiple wavelengths in a UV-light spectrum at or below 250 nm.

9. The system according to any one of the preceding claims, wherein the at least one receiving device comprise one or more receiving optical components, such as filters, waveguides, lenses, and/or beam splitters.

10. The system according to any one of the preceding claims, wherein the at least one receiving device comprise a photodetector for detecting UV-light at or below 250 nm, such as a photodiode, a photoresistor, and/or a phototransistor.

11. The system according to any one of the preceding claims, wherein the system comprises a transceiver, wherein the transceiver comprises the at least one light source for emitting light, the at least one modulation means, the at least one transmitting means, and the receiving device.

12. The system according to any one of the preceding claims, wherein the wavelength of the UV-light is between 100 nm and 250 nm, such as between 120 nm and 250 nm, such as between 140 nm and 250 nm, such as between 160 nm and 250 nm, such as between 180 nm and 250 nm, such as between 190 nm and 250 nm, such as between 190 nm and 240 nm, or such as between 190 nm and 230 nm.

13. The system according to any one of the preceding claims, wherein the at least one receiving device comprises a solar-blind detector.

14. The system according to any one of the preceding claims, wherein the at least one transmitting means comprises one or more transmitting optical components, such as a filter, a waveguide, a lens, and/or a beam splitter.

15. The system of any of the preceding claims, wherein the UV-light is emitted at a power per area of at least 0.1 µW/cm2, such as between 0.1 µW/cm2 and 1000 µW/cm2, such as between 0.1 µW/cm2 and 500 µW/cm2, such as between 0.1 µW/cm2 and 100 µW/cm2, such as between 0.1 µW/cm2 and 50 µW/cm2, such as between 0.2 µW/cm2 and 50 µW/cm2, such as between 0.3 µW/cm2 and 50 µW/cm2, such as between 0.4 µW/cm2 and 50 µW/cm2, such as between 0.5 µW/cm2 and 50 µW/cm2, such as between 0.5 µW/cm2 and 40 µW/cm2, such as between 0.5 µW/cm2 and 30 µW/cm2, such as between 0.5 µW/cm2 and 20 µW/cm2, such as between 0.5 µW/cm2 and 10 µW/cm2, such as between 0.5 µW/cm2 and 5 µW/cm2, such as between 0.5 µW/cm2 and 1 µW/cm2, such as between 0.5 µW/cm2 and 0.8 µW/cm2, hereby allowing for simultaneous communication and disinfection using the UV-light.
